# EUROPÄISCHE PATENTSCHRIFT

(11) **EP 1 009 945 B1**
(45) Veröffentlichungstag und Bekanntmachung des Hinweises auf die Patenterteilung: **12.11.2003**
(21) Anmeldenummer: 98946361.7
(22) Anmeldetag: 17.08.1998
(51) Int. Cl.: F16L 9/22, F16L 11/22, F02M 35/10, H02G 9/06

(54) **ROHR, BESTEHEND AUS ANEINANDERGESETZTEN SCHALEN**
TUBE MADE UP OF SHELLS PLACED ON TOP OF ONE ANOTHER
TUBE CONSTITUE DE COQUES PLACEES L'UNE SUR L'AUTRE

(30) Priorität: 01.09.1997 DE 29715572 U
(43) Veröffentlichungstag der Anmeldung: 21.06.2000
(73) Patentinhaber: FILTERWERK MANN + HUMMEL GmbH, 71631 Ludwigsburg (DE)
(72) Erfinder: DOBUSCH, Heinz, D-71672 Marbach (DE)
(74) Vertreter: Voth, Gerhard, Dipl.-Ing.
(86) Internationale Anmeldenummer: EP9805217
(87) Internationale Veröffentlichungsnummer: WO99011961

(56) Entgegenhaltungen:
- DE-A- 4 329 544
- DE-A- 19 614 313
- DE-C- 3 639 219
- GB-A- 353 050
- US-A- 5 022 685

## Beschreibung

### Stand der Technik

Die Erfindung betrifft ein Rohr aus aneinandergesetzten Schalen nach der Gattung des Hauptanspruchs.

Bei bekannten Rohren, die beispielsweise aus sich in Längsrichtung erstreckenden Halbschalen zusammengesetzt werden, ist die Verbindungsstelle, z. B. die Schweißnaht, in der Regel auch die Dichtverbindung zwischen den Halbschalen. Dies schränkt die Qualität sowohl der Dichtverbindung als auch der Schweißnaht ein.

Aus der DE 42 18 526 C2 ist bekannt, dass die eine Halbschale mit einer widerhakenförmigen Feder in eine entsprechend gestaltete Aufnahme an der anderen Halbschale einrastet. Innerhalb dieser Aufnahme ist eine Dichtung zwischen den beiden Halbschalen angeordnet, die mit der Rastverbindung in einem Wirkzusammenhang steht oder dieser unmittelbar benachbart angeordnet ist.

Das Dokument DE 196 14 313 offenbart eine Saugrohranlage einer Brennkraftmaschine, welche im wesentlichen aus zwei Halbschalen gebildet ist. Die Halbschalen bilden dichtend voneinander getrennte Saugkanäle, wobei sich die Halbschalen in Teilbereichen überdecken. Eine Abdichtung der Saugkanäle erfolgt mit Dichtungen, welche im Endbereich der Überdeckung angeordnet sind.

Das Dokument US 5,022,685 offenbart ein Rohrleitungssystem, welches aus zwei Halbschalen besteht. Die Halbschalen sind dichtend miteinander verklebt, wodurch die Verbindung und eine Abdichtung der Halbschalen zueinander erzeugt wird.

### Aufgabenstellung

Der Erfindung liegt die Aufgabe zugrunde, ein Rohr aus Schalen auf einfache Weise dicht und fest herzustellen.

### Vorteile der Erfindung

Das erfindungsgemäße Rohr, bestehend aus aneinandergesetzten Schalen, die in Längsrichtung dicht aneinander gefügt sind, ist dadurch vorteilhaft, dass eine, von der Dichtfläche in einem vorgegebenen Abstand abgesetzte, in Längsrichtung verlaufende Verbindungsstelle zwischen den Schalen gebildet werden kann. Hierdurch ist eine mit hierzu geeigneten Werkstoffen gebildete Dichtfläche anbringbar, welche durch einen Schweißvorgang an der Verbindungsstelle nicht tangiert wird.

Die Verbindungsstelle liegt auf einfache Weise radial innen neben der Dichtfläche oder auch wird an jeweils von dem Rohr weggeführten Schenkeln an den Schalen angeordnet, wobei die Schenkel vorzugsweise jeweils parallel und tangential vom Rohr weggeführt sind.

Mit der erfindungsgemäßen Anordnung können auch zwei Rohre aus drei Schalen gebildet werden, wobei eine mittlere Schale die Grenzwand zwischen den äußeren Schalen bildet. Angewendet werden kann die Erfindung in vorteilhafter Weise, wenn das Rohr ein Ansaugrohr für die Ansaugluft eines Verbrennungsmotors ist.

### Zeichnung

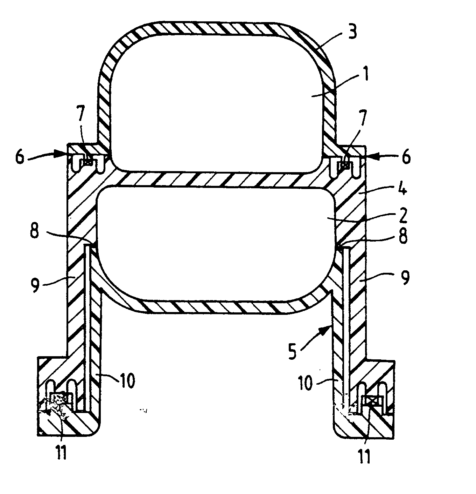

Die Erfindung wird anhand einer Figur der Zeichnung erläutert Die Figur zeigt einen Schnitt durch ein Ausführungsbeispiel eines aus drei Schalen zusammengesetzten Rohres.

### Beschreibung des Ausführungsbeispiels

Ein Ausführungsbeispiel nach der Figur ist hier so ausgeführt, dass ein Rohr 1 und ein Rohr 2 aus einer oberen Schale 3, einer mittleren Schale 4 und einer unteren Schale 5 gebildet wird. Das obere Rohr 1 mit den Schalen 3 und 4 weist eine Dichtfläche 6 und eine seitlich daneben liegende Schweißnaht 7 als Verbindungsstelle auf. Das untere Rohr 2 mit den Schalen 4 und 5 weist eine Dichtfläche 8 und auf jeweils abgesetzten Schenkeln 9 und 10 eine Schweißnaht 11 als Verbindungsstelle auf. Die jeweilige Schweißverbindung wird vorzugsweise durch Ultraschallschweißen hergestellt.

## Patentansprüche

1. Rohr, bestehend aus aneinandergesetzten Schalen (3,4,5 ), die in Längsrichtung mit mindestens einer Dichtfläche und mindestens einer Verbindungsstelle aneinandergefügt sind, wobei die Verbindungsstelle (7,11) in einem vorgegebenen Abstand von der Dichtfläche (6,8) abgesetzt ist, wobei die Schalen (3,4,5) an der Verbindungsstelle (8,11) miteinander verschweißt sind, **dadurch gekennzeichnet, dass**
- die Verbindungsstelle (7) in einem vorgegebenen Abstand Seitlich neben der Dichtfläche (6) liegt.

2. Rohr, bestehend aus aneinandergesetzten Schalen (3,4,5 ), die in Längsrichtung mit mindestens einer Dichtfläche und mindestens einer Verbindungsstelle aneinandergefügt sind, wobei die Verbindungsstelle (7,11) in einem vorgegebenen Abstand von der Dichtfläche (6,8) abgesetzt ist, wobei die Schalen (3,4,5) an der Verbindungsstelle (8,11) miteinander verschweißt sind, **dadurch gekennzeichnet, dass**
- die Verbindungsstelle (11) an jeweils von dem Rohr wegführenden Schenkeln (9,10) an den Schalen (4,5) gebildet ist.

3. Rohr nach Anspruch 2, **dadurch gekennzeichnet, dass**
- die Schenkel jeweils parallel und tangential vom Rohr (2) weggeführt sind.

4. Rohr nach einem oder mehreren der vorangehenden Ansprüche,
**dadurch gekennzeichnet, dass** aus drei Schalen (3,4,5), zwei Rohre (1,2) gebildet sind, wobei die mittlere (4) Schale, die Grenzwand zwischen den äußeren Schalen (3,5) bildet.

5. Rohr nach einem oder mehreren der vorangehenden Ansprüche,
**dadurch gekennzeichnet, dass**
das Rohr (1,2) ein Ansaugrohr für die Ansaugluft eines Verbrennungsmotors ist.

## Claims

1. Tube, composed of abutting shells (3,4,5) which, when viewed with respect to the longitudinal direction, are joined to one another by at least one sealing face and at least one junction, the junction (7,11) being offset at a prescribed spacing from the sealing face (6,8), and the shells (3,4,5) being welded together at the junction (7,11), **characterised in that**
- the junction (7) lies adjacent the sealing face (6) at a prescribed spacing radially inwardly.

2. Tube, composed of abutting shells (3,4,5) which, when viewed with respect to the longitudinal direction, are joined to one another by at least one sealing face and at least one junction, the junction (7,11) being offset at a prescribed spacing from the sealing face (6,8), and the shells (3,4,5) being welded together at the junction (7,11), **characterised in that**
- the junction (11) is formed on the shells (4,5) at each of the portions (9,10) extending away from the tube.

3. Tube according to claim 2, **characterised in that**
- the portions each extend away from the tube (2) parallel to each other and tangentially.

4. Tube according to one or more of the preceding claims, **characterised in that** two tubes (1,2) are formed from three shells (3,4,5), the central shell (4) forming the boundary wall between the outer shells (3,5).

5. Tube according to one or more of the preceding claims, **characterised in that** the tube (1,2) is an inlet pipe for the intake air of an internal combustion engine.

## Revendications

1. Tube formé de coquilles (3, 4, 5) appliquées l'une contre l'autre et ayant, dans la direction longitudinale, au moins une surface d'étanchéité et au moins un point de liaison pour leur assemblage, le point de liaison (7, 11) se trouvant à une distance prédéterminée de la surface d'étanchéité (6, 8), les coquilles (3, 4, 5) étant soudées entre elles à leur point de liaison (8, 11),
**caractérisé en ce que**
le point de liaison (7) se situe à côté de la surface d'étanchéité (6) à une distance prédéterminée latéralement vers l'extérieur.

2. Tube formé de coquilles (3, 4, 5) appliquées l'une contre l'autre et qui présentent dans la direction longitudinale au moins une surface d'étanchéité et au moins un point de liaison pour leur assemblage, le point de liaison (7, 11) se trouvant à une distance prédéterminée de la surface d'étanchéité (6, 8), les coquilles (3, 4, 5) étant soudées les unes aux autres à leur point de liaison (8, 11),
**caractérisé en ce que**
le point de jonction (11) est formé chaque fois par les branches (9, 10) des coquilles (4, 5) qui s'écartent du tube.

3. Tube selon la revendication 2,
**caractérisé en ce que**
les branches s'écartent chaque fois parallèlement et tangentiellement par rapport au tube (2).

4. Tube selon l'une ou plusieurs des revendications précédentes,
**caractérisé en ce qu'**
il est formé de trois coquilles (3, 4, 5), de deux tubes (1, 2) et la coquille intermédiaire (4) forme la cloison limite entre les coquilles extérieures (3, 5).

5. Tube selon l'une ou plusieurs des revendications précédentes,
**caractérisé en ce que**
le tube (1, 2) est la tubulure d'aspiration pour l'air aspiré par un moteur à combustion interne.
